Europäisches Patentamt

European Patent Office

Office européen des brevets

(19)

(11) Veröffentlichungsnummer : **0 165 475**
**B1**

(12) **EUROPÄISCHE PATENTSCHRIFT**

(45) Veröffentlichungstag der Patentschrift :
**15.03.89**

(21) Anmeldenummer : **85106056.6**

(22) Anmeldetag : **17.05.85**

(51) Int. Cl.⁴ : **B 65 G   7/04**, B 60 B 33/00

(54) Schwerlast-Rollenwagen.

(30) Priorität : **19.05.84 DE 3418744**

(43) Veröffentlichungstag der Anmeldung :
**27.12.85 Patentblatt 85/52**

(45) Bekanntmachung des Hinweises auf die Patenterteilung : **15.03.89 Patentblatt 89/11**

(84) Benannte Vertragsstaaten :
**AT BE CH DE FR GB IT LI NL SE**

(56) Entgegenhaltungen :
**CH--A--   459 884**
**DE--A-- 3 101 431**
**FR--A-- 1 366 110**
**GB--A-- 1 008 550**
**GB--A-- 1 110 296**
**US--A-- 3 179 437**
**US--A-- 3 667 085**

(73) Patentinhaber : **Schlott, Hans-Joachim**
**Hindenburgstrasse 73**
**D-2820 Bremen 77 (DE)**

(72) Erfinder : **Schlott, Wolfgang**
**verstorben**
**(DE)**

(74) Vertreter : **Eisenführ & Speiser**
**Martinistrasse 24**
**D-2800 Bremen 1 (DE)**

**Beschreibung**

Die Erfindung betrifft eine Vorrichtung zum Transport von schweren Lasten, bestehend aus mehreren einachsigen Fahrgestellen, die eine ebene Lastauflageplatte sowie ein auf einer Rollenachse gelagertes Laufrollenpaar aufweisen und mittels mehrerer Befestigungsbohrungen in verschiedenen Achsausrichtungen unter der Last befestigbar sind.

Eine solche Vorrichtung ist aus der FR-A-1 366 110 bekannt, bei der unter einer zu bewegenden Last an allen vier Ecken Tragbügel angeordnet sind. Unter jedem der Tragbügel kann ein Laufwerk mittels Bolzen in verschiedenen Winkelausrichtungen festgeschraubt werden, und mittels einer Gewindeschraube kann über ein Werkzeug das Laufwerk in senkrechter Richtung eingezogen oder auf den Boden gedrückt werden, um eine darauf befindliche Last anzuheben. Mit dieser Anordnung können die Fahrgestelle jedoch nicht um eine senkrechte Schwenkachse gedreht werden, sondern hierzu ist es erforderlich, die Laufrollen in verschiedenen Achsausrichtungen unter der Last zu befestigen, wozu die Lagerrahmen erst von dem Tragbügel abgeschraubt und wieder neu befestigt werden müssen.

Zum Transport von Schwerlasten, insbesondere zum Versetzen solcher Lasten in Gebäuden, Werkshallen o.dgl., werden Spezialfahrzeuge in der Form von Lastwagen mit vielen Rollen eingesetzt, die gruppenweise über eine Deichsel begrenzt lenkbar sind. Diese Spezialwagen haben jedoch den Nachteil, daß sie einen verhältnismäßig großen Lenkradius sowie eine bestimmte Größe der Transportplattform haben, so daß unter beengten Raumverhältnissen der Transport von großen Schwerlasten umständlich, wenn nicht sogar unmöglich ist. Weiterhin sind Panzerwagen bekannt, bei denen mehrere Rollen auf einer Druckplatte gelagert sind und die unter der zu transportierenden Last befestigt werden können. Einmal an der zu bewegenden Last befestigt, sind diese Panzerwagen nicht lenkbar, sondern die Last muß bei einer Richtungsänderung durch einen Kran o.dgl. angehoben, die Rollen müssen gelöst und verdreht und wieder befestigt werden, bevor ein weiterer Transport erfolgen kann. Die Rollen dieser Panzerwagen sind aus Stahl und erfordern eine entsprechende Vorbereitung des Bodens, auf dem die Last transportiert werden soll.

Darüber hinaus ist es aus der GB-A 1 008 550 bekannt, um eine Schwenkachse schwenkbare Transportrollen zu verwenden, bei denen sich die Rollachse und die Schwenkachse jedoch nicht schneiden, so daß sich wegen des vorhandenen Hebelarms starke Verkantungskräfte auf die Schwenkachse auswirken, so daß keine schweren Lasten transportiert werden können. Darüber hinaus ist ein Verschwenken der Rollen um die Schwenkachse unter Last praktisch unmöglich.

Der Erfindung liegt die Aufgabe zugrunde, eine Vorrichtung mit mehreren einachsigen Fahrgestellen vorzuschlagen, die unter der zu transportierenden Schwerlast befestigt werden und ohne ein Absetzen der Last verschwenkt werden können, um Änderungen oder Anpassungen der Transportrichtung vornehmen zu können. Darüber hinaus sollen die einzelnen Fahrgestelle der erfindungsgemäßen Vorrichtung bei voller Manövrierbarkeit eine kleine Bauweise besitzen.

Diese Aufgabe wird erfindungsgemäß durch eine Vorrichtung der eingangs genannten Art gelöst, die dadurch gekennzeichnet ist, daß die Rollenachse mit dem Laufrollenpaar unter der Lastauflageplatte jedes Fahrgestelles mittels eines Axial-Drucklagers schwenkbar gelagert und in mehreren Schwenkstellungen im Bereich von 360° arretierbar ist und daß sich Schwenkachse und Rollenachse schneiden.

Eine solche Vorrichtung hat den Vorteil, daß je nach der Größe und dem Gewicht der zu transportierenden Last die Anzahl der unter der Last befestigten Fahrgestelle den Verhältnissen angepaßt werden kann, wobei das ganze keinen größeren Raum als die Grundfläche der zu transportierenden Last einnimmt. Eine niedrige Bauhöhe ist ebenfalls gegeben.

Eine vorteilhafte Ausgestaltung der Erfindung ist dadurch gekennzeichnet, daß die Rollenachse gegenüber der Lastauflageplatte in ihrer Schwenkbewegung arretierbar ist, vorzugsweise in vorgegebenen Winkelstellungen (z.B. alle 22,5°). Durch diese Maßnahme läßt sich die Last im arretierten Zustand der Rollenachse zielgenau in vorbestimmter Richtung bewegen, was insbesondere bei beengten Raumverhältnissen in Werkshallen o.dgl. von großem Vorteil ist.

Weitere vorteilhafte Ausgestaltungen der Erfindung sind den Unteransprüchen zu entnehmen.

Die Erfindung wird nachfolgend anhand eines Ausführungsbeispieles unter Bezug auf die Zeichnungen näher erläutert. Es zeigen :

Fig. 1 eine Seitenansicht eines Fahrgestelle der erfindungsgemäßen Vorrichtung, teilweise geschnitten,

Fig. 2 eine Vorderansicht des Fahrgestelle nach Fig. 1, teilweise geschnitten,

Fig. 3 eine Draufsicht auf die Lastauflageplatte des Fahrgestelles nach den Fig. 1 und 2,

Fig. 4 einen Schnitt durch ein Einzelteil der erfindungsgemäßen Vorrichtung,

Fig. 5 eine Seitenansicht einer unter einer Last befestigten Vorrichtung mit Längsträgern, und

Fig. 6 eine Seitenansicht einer unter einer Last befestigten Vorrichtung mit Querträgern.

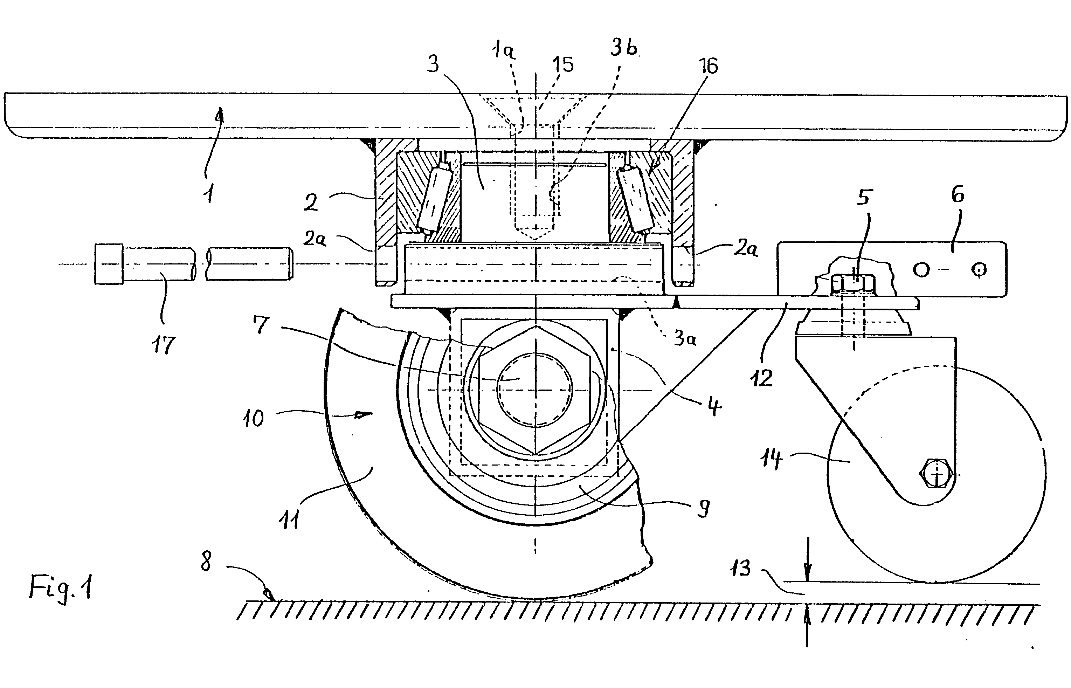

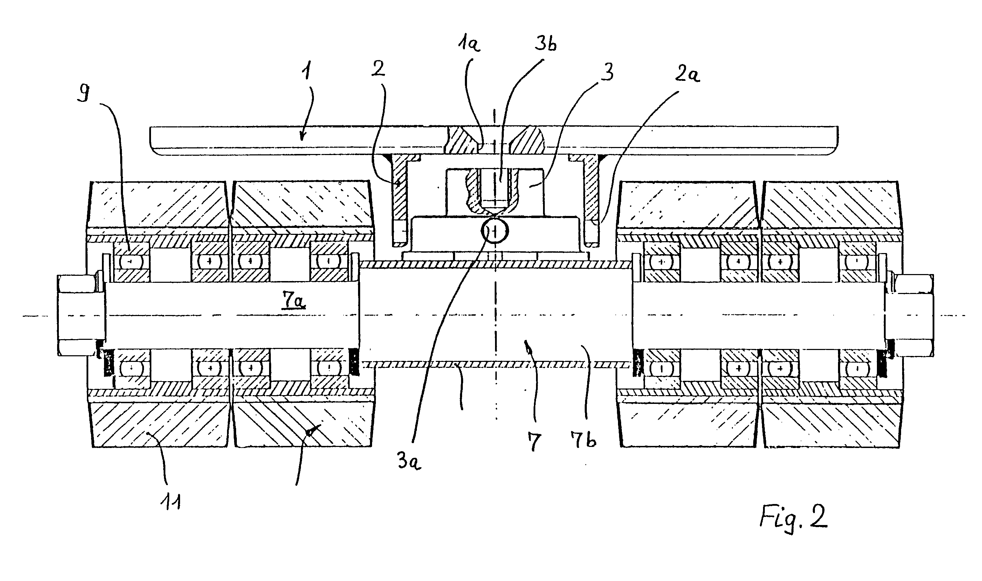

Der in den Figuren 1 und 2 gezeigte Rollenwagen (Fahrgestell) enthält eine ebene Lastauflageplatte 1, an deren Unterseite ein Ring 2 zur Aufnahme eines Axial-Drucklagers 16 angeschweißt ist. Im Inneren des Axial-Drucklagers 16 ist ein Schwenklagerbolzen 3 befestigt, an dessen unterer Fläche ein Vierkantrohr 4 angeschweißt ist, in das eine Rollenachse 7 mit ihrem dickeren Abschnitt 7b eingepreßt ist. Die Rollenachse 7 trägt an ihren beidseitigen äußeren und dünneren Abschnitten 7a je zwei Laufrollen 10, die auf Rillenkugellagern 9 gelagert sind.

Die einzelnen Rollen 10 sind mit Radringen oder einem Überzug aus Teflon versehen, um auch große Lasten über Transportwege mit empfindlichem Boden zu transportieren, wie z.B. das Transportieren von größeren Panzerschränken o.dgl. in Bürogebäuden. Zur besseren Verteilung der Last auf den Transportboden sind auf der Rollenachse 7 zwei Laufrollenpaare 10 vorgesehen. Es hat sich als ganz überraschend herausgestellt, daß die derart mit Teflon beschichteten Rollen selbst bei großen Lasten sehr empfindliche Bodenbeläge, wie z.B. Marmor etc., nicht beschädigen und auch auf weichen Böden keine Spurrollen hinterlassen.

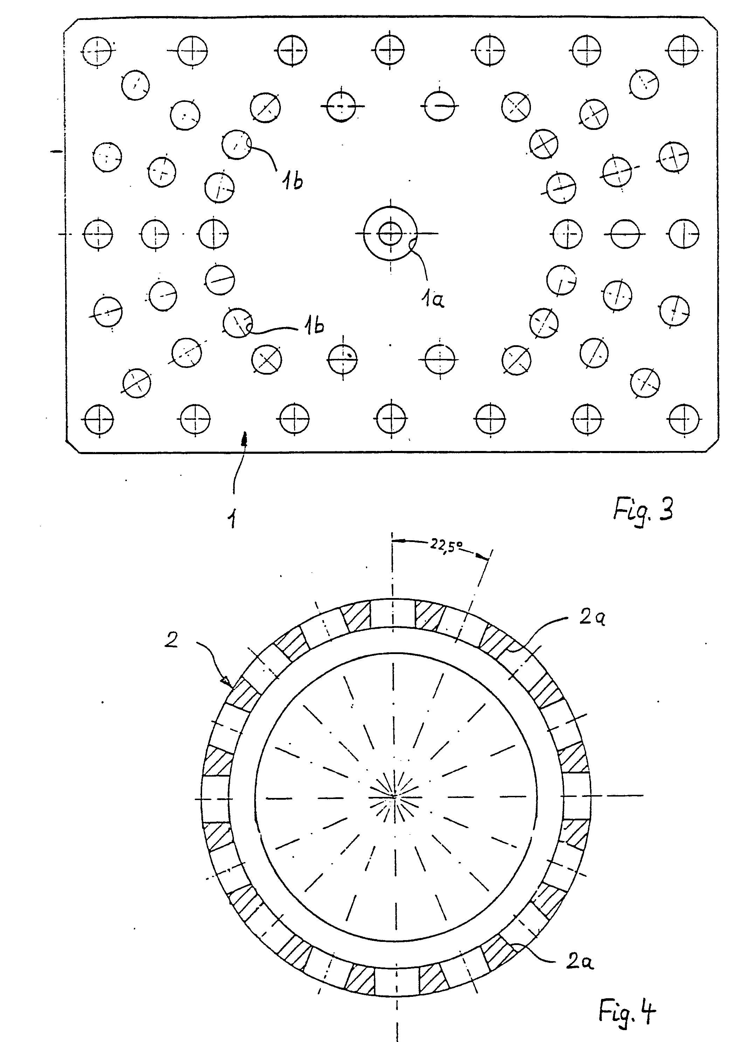

Die Lastauflageplatte 1 weist in der Schwenkachse des Axial-Drucklagers 16 eine Bohrung 1a auf, durch die sie mittels einer Senkkopfschraube 15 mit dem Schwenklagerbolzen 3, der mit einem Innengewinde 3b versehen ist, verschraubt ist, damit sich die beiden Teile nicht voneinander lösen können. Wie aus Fig. 3 zu sehen ist, ist die Lastauflageplatte 1 mit einer Vielzahl von Befestigungsbohrungen 1b versehen, durch die die Lastauflageplatte mit der Grundfläche der zu transportierenden Schwerlast verschraubt werden kann.

Die Schwenkachse des Axial-Drucklagers 16 schneidet die Rollenachse 7, so daß sich bei ausgerichteter Oberfläche der Lastauflageplatte 1 keine Kippkräfte auf den erfindungsgemäßen Rollenwagen auswirken können. Durch diese Bauweise ist auch ein Verschwenken der Rollenachse 7 gegenüber der Lastauflageplatte 1 unter Last möglich. Hierzu ist an dem Schwenklagerbolzen 3 ein Verlängerungsarm 12 angeschweißt, der einen Deichselansatz 6 zur Befestigung einer Deichsel (nicht gezeigt) zur Lenkung des erfindungsgemäßen Rollenwagens trägt.

Wie insbesondere auch aus der Figur 4 hervorgeht, weist der an der Lastauflageplatte 1 angeordnete Ring 2 in seinem unteren Bereich eine Vielzahl von um einen bestimmten Winkel gegeneinander versetzten Bohrungen 2a auf, von denen jeweils zwei einander gegenüberliegende mit einer Querbohrung 3a im Schwenklagerbolzen 3 fluchten. Durch Einschieben eines Arretierbolzens 17 durch die Bohrungen 2a und 3a kann die Rollenachse 7 gegenüber der Lastauflageplatte 1 in den vorbestimmten Winkeln (alle 22,5°) arretiert werden.

Um ein Unterschieben des erfindungsgemäßen Rollenwagens unter die vorher angehobene, zu transportierende Last zu erleichtern, ist unter dem Verlängerungsarm 12 mittels eines Stützradbolzens 5 ein schwenkbares Stützrad 14 angeordnet, so daß der Rollenwagen im unbelasteten Zustand leicht verschoben werden kann. Damit das Stützrad 14 jedoch im belasteten Zustand des Rollenwagens nicht überlastet wird bzw. die Manövrierfähigkeit beeinträchtigt, ist die Stützrolle 14 gegenüber dem Transportboden 8 (bei waagerechter Lage des Rollenwagens) in einem Abstand 13 angeordnet, so daß das Stützrad 14 frei in der Luft schwebt.

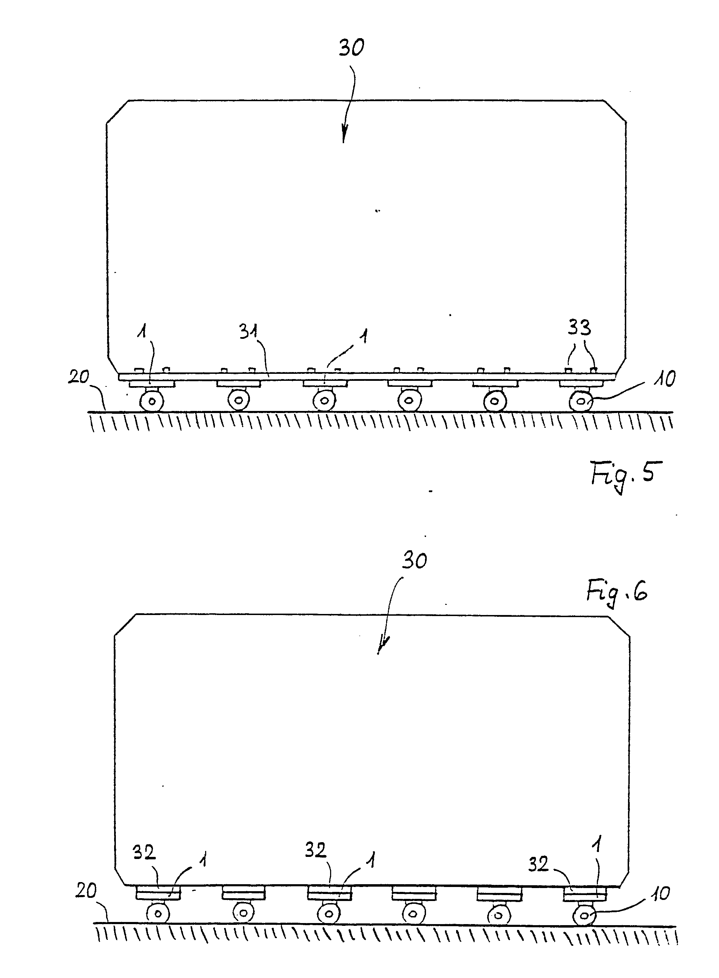

Die Fig. 5 und 6 zeigen eine Schwerlast 30, unter der eine Vielzahl von Rollenwagen 1, 10 angeordnet ist. Stellt eine solche Schwerlast 30 z. B. einen elektrischen Transformator dar, so können diese Schwerlasten bis zu mehreren hundert Tonnen wiegen. Auch wenn es möglich wäre, an den vier Eckpunkten die erfindungsgemäßen Rollenwagen anzuordnen, so ist es doch aus Gründen der mechanischen Beanspruchung der Schwerlast 30 und insbesondere des Transportweges 20 erforderlich, die Last auf mehr als vier Rollenwagen zu verteilen.

Bei der Anordnung nach Fig. 5 sind unter der Last 30 Längsträger 31 angeordnet, die entweder an der Last 30 von vornherein befestigt sind oder aber nur zum Transport vorgesehen werden. Unter diesen Längsträgern 31 kann dann eine sehr große Anzahl von Rollenwagen 1, 10 angeordnet werden, die durch entsprechende Verschraubungen 33 mit dem Längsträger 31 verschraubt werden. Auf diese Weise gleitet die Schwerlast 30 sozusagen auf einem Teppich über den Transportboden 20, so daß keine Beschädigungen oder Abdrücke entstehen können. Darüber hinaus wird die Schwerlast 30 an vielen Stellen unterstützt, so daß an dieser keinerlei Beschädigungen auftreten können.

In Fig. 6 sind unter der Last 30 mehrere Querträger 32 zum Transport angeordnet, unter denen die Rollenwagen 1, 10 befestigt sind. Auch hier ist es möglich, eine sehr große Anzahl von Rollenwagen anzuordnen, und zwar nicht nur in Längsrichtung der Last 30, sondern über die gesamte Breite entlang der Querträger 32 verteilt.

## Patentansprüche

1. Vorrichtung zum Transport von schweren Lasten, bestehend aus mehreren einachsigen Fahrgestellen, die eine ebene Lastauflageplatte (1) sowie ein auf einer Rollenachse (7) gelagertes Laufrollenpaar (10) aufweisen und mittels mehrerer Befestigungsbohrungen (1b) in verschiedenen Achsausrichtungen unter der Last befestigbar sind, dadurch gekennzeichnet, daß die Rollenachse (7) mit dem Laufrollenpaar (10) unter der Lastauflageplatte (1) jedes Fahrgestells mittels eines Axial-Drucklagers (16) schwenkbar gelagert und in mehreren Schwenkstellungen im Bereich von 360° arretierbar ist, und daß sich Schwenkachse und Rollenachse schneiden.

2. Vorrichtung nach Anspruch 1, dadurch gekennzeichnet, daß die Rollenachse (7) gegenüber der Lastauflageplatte (1) in vorgegebenen Winkelstellungen (z.B. alle 22,5°) arretierbar ist.

3. Vorrichtung nach Anspruch 1 oder 2, dadurch gekennzeichnet, daß an der Rollenachse (7) ein Deichselansatz (6) zum Befestigen einer Deichsel vorgesehen ist.

4. Vorrichtung nach einem oder mehreren der vorhergehenden Ansprüche,

dadurch gekennzeichnet, daß auf der Rollenachse (7) mehrere Laufrollenpaare (10) vorgesehen sind.

5. Vorrichtung nach einem oder mehreren der vorhergehenden Ansprüche,

dadurch gekennzeichnet, daß die Laufrollen (10) Radringe (11) aus Teflon aufweisen.

6. Vorrichtung nach einem oder mehreren der vorhergehenden Ansprüche,

dadurch gekennzeichnet, daß im Abstand von der Rollenachse (7) an einem Verlängerungsarm (12) eine Stützrolle (14) angeordnet ist, deren Abstand von der Lastauflageplatte (1) geringer ist als der des Laufrollenpaares (10), derart, daß die Stützrolle (14) im belasteten (im wesentlichen waagerechten) Zustand der Lastauflageplatte (1) frei über dem Boden (5) schwebt.

7. Vorrichtung nach einem oder mehreren der vorstehenden Ansprüche,

dadurch gekennzeichnet, daß unter der zu transportierenden Last (30) zum Transport Längs- und/oder Querträger (31, 32) angeordnet werden, unter denen die Fahrgestelle (1, 10) befestigt werden.

## Claims

1. Arrangement for transporting heavy loads, consisting of a plurality of single-axle underframes, which comprise a flat load-supporting plate (1) and also a pair of rollers (1c) mounted on a roller axle (7) and capable of being fixed by means of a plurality of fixing bores (1b) in different axial alignments beneath the load, characterised in that the roller axle (7) with the pair of rollers is mounted to be pivotal beneath the load-supporting plate (1) of each underframe by means of an axle thrust bearing (16) and is capable of being locked in several angular positions in the range of 360°, and that pivotal axis and roller axis intersect one another.

2. Arrangement according to claim 1, characterised in that the roller axle (7) is capable of being locked with respect to the load-supporting plate (1) in prescribed angular positions (e.g. all 22.5°).

3. Arrangement according to claim 1 or 2, characterised in that a pole attachment (6) for the fixing of a pole is provided on the roller axle (7).

4. Arrangement according to one or more of the preceding claims, characterised in that several pairs of rollers (10) are provided on the roller axle (7).

5. Arrangement according to one or more of the preceding claims, characterised in that the rollers (10) comprise rims (11) made of Teflon.

6. Arrangement according to one or more of the preceding claims, characterised in that a support roller (14) is arranged on an extention arm (12) at a distance from the roller axle (7), the distance of the support roller from the load-supporting plate (1) being smaller than that of the pair of track rollers (10), so that the support roller (14) in the loaded (substantially horizontal) state of the load-supporting plate (1) pivots freely above the base (5).

7. Means according to one or more of the preceding claims, characterised in that, for purposes of transport, longitudinal and/or transverse girders (31, 32) are arranged beneath the load (30) to be transported, the underframes (1, 10) being fixed beneath said girders.

## Revendications

1. Dispositif pour le transport de lourdes charges, constitué par plusieurs châssis à un essieu, qui présentent un plateau d'appui de charge plan (4), ainsi qu'une paire de rouleaux mobiles (10) montée sur un axe de rouleaux (7), et peuvent être fixés sous la charge selon des alignements de l'axe différents au moyen de plusieurs perçages de fixation, caractérisé en ce que l'axe de rouleaux (7) est, avec la paire de rouleaux mobiles (10), monté pivotant sous le plateau d'appui de la charge (1) de chaque châssis au moyen d'un palier de poussée axial (16) et peut être arrêté suivant plusieurs positions de pivotement dans un secteur couvrant 360° et en ce que l'axe de pivotement et l'axe de rouleaux se recoupent.

2. Dispositif selon la revendication 1, caractérisé en ce que l'axe de rouleaux (7) peut être arrêté par rapport au plateau d'appui de la charge suivant des positions angulaires prédéterminées (p. ex. tous les 22,5°).

3. Dispositif selon la revendication 1 ou 2, caractérisé en ce qu'il est prévu sur l'axe de rouleaux (7) une embase de timon (6) pour la fixation d'un timon.

4. Dispositif selon une ou plusieurs des revendications qui précèdent,

caractérisé en ce que plusieurs paires de rouleaux mobiles (10) sont prévus sur l'axe de rouleaux (7).

5. Dispositif selon l'une ou plusieurs des revendications qui précèdent

caractérisé en ce que les rouleaux mobiles (10) présentent des bandages de roues (11) en téflon.

6. Dispositif selon l'une ou plusieurs des revendications qui précèdent,

caractérisé en ce qu'il est disposé sur un bras prolongateur (12) à quelque distance de l'axe de rouleaux (7) un rouleau d'appui (14) dont la distance au plateau d'appui de la charge (1) est inférieure à celle de la paire de rouleaux mobiles (10), de telle sorte que le rouleau d'appui (14) est suspendu librement au-dessus du sol (5), lorsque le plateau d'appui de la charge (1) se trouve par ailleurs à l'état chargé (sensiblement horizontal).

7. Dispositif selon l'une ou plusieurs des revendications qui précèdent,

caractérisé en ce qu'il est disposé sous la charge à transporter (30) des longerons et/ou des traverses (31, 32) pour son transport, sous lesquels sont fixés les châssis (1, 10).

Fig. 1

EP 0 165 475 B1

Fig. 2

Fig. 3

22,5°

Fig. 4

Fig. 5

Fig. 6